# EUROPÄISCHE PATENTSCHRIFT

(11) **EP 1 874 496 B1**
(45) Veröffentlichungstag und Bekanntmachung des Hinweises auf die Patenterteilung: **24.09.2014**
(21) Anmeldenummer: 06724301.4
(22) Anmeldetag: 13.04.2006
(51) Int. Cl.: B23B 23/04, B23B 31/16

(54) **SPANNVORRICHTUNG**
CLAMPING APPARATUS
DISPOSITIF DE SERRAGE

(30) Priorität: 21.04.2005 DE 102005018655
(43) Veröffentlichungstag der Anmeldung: 09.01.2008
(73) Patentinhaber: CNC-Service Egger, 38490 Charancieu (FR)
(72) Erfinder: EGGER, Christian, F-38490 Charancieu (FR)
(74) Vertreter: Jeck, Anton
(86) Internationale Anmeldenummer: PCT/EP2006/003403
(87) Internationale Veröffentlichungsnummer: WO 2006/111320

(56) Entgegenhaltungen:
- DE-A1- 19 934 375
- US-A- 4 353 561
- US-B1- 6 568 694
- DATABASE WPI Section PQ, Week 198514 Derwent Publications Ltd., London, GB; Class P54, AN 1985-086232 XP002386841 -& SU 1 115 855 A (GONCHAROV A T) 30. September 1984 (1984-09-30)
- DATABASE WPI Section PQ, Week 198139 Derwent Publications Ltd., London, GB; Class P54, AN 1981-K1210D XP002386842 -& SU 795 727 A (DORMIDONTOV A A) 15. Januar 1981 (1981-01-15)
- PATENT ABSTRACTS OF JAPAN Bd. 1996, Nr. 01, 31. Januar 1996 (1996-01-31) -& JP 07 246559 A (NIPPONDENSO CO LTD), 26. September 1995 (1995-09-26)

## Beschreibung

Die Erfindung betrifft eine Spannvorrichtung zum Einspannen eines entlang einer Bearbeitungsachse zu bearbeitenden Werkstücks in eine Bearbeitungsmaschine.

Bearbeitungsmaschinen, wie etwa als Rundschleif-, Fräs- oder Drehmaschinen ausgeführte Werkzeugmaschinen, umfassen eine oder mehrere Bearbeitungsachsen, entlang der ein in die Bearbeitungsmaschine eingespanntes Werkstück bearbeitet werden kann. Das Werkstück wird dabei mittels einer Spannvorrichtung in der Bearbeitungsmaschine eingespannt. Je nach Bearbeitungsmaschine und Bearbeitungsvorgang wird das Werkstück entweder entlang der Bearbeitungsachse, oder radial zur Bearbeitungsachse eingespannt.

Zum Einspannen entlang der Bearbeitungsachse ist beispielsweise bekannt, das Werkstück zwischen zwei relativ zueinander entlang der Bearbeitungsachse verstellbare kegel- oder kegelstumpfförmige Spannspitzen einzuspannen. Die Spannspitzen sind dabei unter Kraft gegeneinander verstellbar. Bei einem rohrförmigen Werkstück greifen die Spannspitzen zum Teil mit Federdruck stirnseitig in das Werkstück. Zum Anpassen der Spannspitzen an unterschiedliche Werkstücke ist bekannt, die Spannspitze aus einem Spannkopf und an diesem auswechselbar angeordneten Spannelementen herzustellen. Die Werkstück-Parallelitaet wird dabei ueber die achsparallele Verschiebung der Spannspitzen zur Bearbeitungsachse ausgerichtet. Die Spannvorrichtung umfasst dabei die beiden Spannspitzen sowie den Verstellmechanismus zum Gegeneinanderdrücken der beiden Spannspitzen.

Aus DE 195 33 456 B4 ist eine an einem Reitstock anordbare Spannspitze bekannt, welche an einer Pinole abgestützt ist. Die Spannspitze ist einteilig ausgeführt und weist eine Kreiskegelform auf.

Aus DE 36 22 725 A1 ist eine in einem Gehäuse gelagerte, mitlaufende Spannspitze oder Pinole bekannt, welche ebenfalls einteilig ausgeführt ist, und eine Kreiskegelform aufweist.

Aufgrund der rigiden Spannung der einteilig ausgeführten, kreiskegelförmigen Spannspitzen besteht die Gefahr, beispielsweise rohrförmige Werkstücke, die ungenau gefertigte oder durch Haerteverzug deformierte Zentrierungen (Spannflaechen) aufweisen, beim Einspannen zwischen den Spannspitzen zu deformieren. Auch kann beispielsweise eine Verschmutzung von Spannspitzen oder Werkstück bei der beschriebenen Einspannsituation zu erheblichen Deformationen führen.

Durch SU 1115855 A, ist eine Spannspitze mit einer einen sechseckigen Querschnitt senkrecht zur Bearbeitungsachse aufweisenden, pyramidenförmigen Mantelfläche bekannt. An den Verbindungskanten zwischen den seitlichen Pyramidenflächen sind Rollen angeordnet. Diese können punktuell mit einer stirnseitigen Rohrinnenkante in Kontakt gebracht werden. Durch eine abwechselnde Anordnung der Rollen an gegenüberliegenden Kanten wird sichergestellt, dass über den Umfang betrachtet immer ein stabiler Dreipunkt-Kontakt zwischen den am Spannkopf angeordneten Rollen und einem Werkstück hergestellt wird.

Durch SU 795 727 ist eine Spannvorrichtung zum Einspannen eines entlang einer Bearbeitungsachse zu bearbeitenden Werkstücks in eine die Bearbeitungsachse umfassende Bearbeitungsmaschine mit den Merkmalen des Oberbegriffs des Anspruchs 1 bekannt. Die Spannvorrichtung weist eine aus einem um die Bearbeitungsachse drehbaren Spannkopf und an diesem schwimmend angeordnete Spannelemente bestehende Spannspitze auf. Die Spannelemente sind zu einer Art schwimmenden Anordnung zur Anpassung an schräg abgeschnittene rohrförmige Werkstücke gegenläufig in einer Richtung parallel zu einer zum Einspannen erforderlichen Verstellrichtung der Spannspitze translatorisch verschiebbar miteinander gekoppelt.

Zum Einspannen radial zur Bearbeitungsachse wird üblicherweise ein um die Bearbeitungsachse drehbares, antreibbares Spannfutter mit radial beweglichen, beispielsweise mittels eines speziellen Schlüssels verstellbaren und gegen das Werkstück spannbaren Spannbacken verwendet. Die Spannbacken sind dabei so ausgebildet, dass das Werkstück von seinem Außenumfang her, oder im Falle eines rohrförmigen Werkstücks von dessen Innenumfang her zwischen die Spannbacken gespannt werden kann. Die Spannvorrichtung umfasst in diesem Fall das aus Spannfutterkörper, radial verstellbaren Spannbacken sowie Verstellmechanismus zum gleichzeitigen, radialen Verstellen der Spannbacken bestehende Spannfutter.

Durch DE 1 882 317 U ist eine Spannvorrichtung bekannt, mit der ein Werkstück radial zur Bearbeitungsachse eingespannt wird. Die Spannvorrichtung weist einen Spannkopf auf, mit einem in einer Bearbeitungsmaschine unverdrehbar angeordneten Konus sowie einem gegenüber dem Konus um die Bearbeitungsachse drehbar angeordneten Läufer, der von einem axial gegenüber dem Läufer verschiebbaren Läufergehäuse umgeben ist. Die Spannvorrichtung weist darüber hinaus Spannelemente auf in Form von in dem Läufergehäuse radial zur Bearbeitungsachse verschiebbar angeordneten, nach außen gerichteten Spreizstiften. Die Spreizstifte stützen sich im Inneren des Läufergehäuses auf der Mantelfläche des Läufers ab. Die Mantelfläche des Läufers ist konisch. Die Geometrie des den Läufer aufnehmenden Hohlraums im Inneren des Läufergehäuses korrespondiert mit der Mantelfläche des Läufers. Durch eine Verschiebung des Läufergehäuses gegenüber dem Läufer werden die Spitzen der Spreizstifte radial, gleichmäßig und gleichweit aus dem Läufergehäuse herausgedrückt oder hereingezogen. Dadurch ergibt sich eine rigide Verstellung der Spannelemente gegenüber dem Spannkopf, durch welche das Werkstück radial von Innen eingespannt wird.

Verglichen mit den zuvor beschriebenen Spannspitzen können hierbei der Spannfutterkörper als Spannkopf und die Spannbacken als Spannelemente bezeichnet werden, so dass eine Spannvorrichtung unabhängig von der Einspannsituation einen Spannkopf, am Spannkopf verstellbar angeordnete

Spannelemente sowie einen Verstellmechanismus umfasst. Üblicherweise weist ein Spannkopf zur Verwendung in einer Bearbeitungsmaschine drei Spannelemente auf, die das Werkstück zwischen drei sich zwischen den Spannelementen und dem Werkstück beim Einspannen ausbildenden Kontaktstellen zentrieren.

Aus DE 296 24 215 U1 ist eine Spannvorrichtung bekannt, welche einen Spannfutterkörper mit mindestens zwei radialen Backenführungen für jeweils eine aus Grund- und Aufsatzbacke bestehende, in der Backenführung radial verstellbare Spannbacke aufweist.

Aus DE 203 20 649 U1 ist eine Spannvorrichtung mit einem Spannfutterkörper und mehreren Spannbacken, die in radialen Backenführungen des Spannfutterkörpers bewegbar angeordnet und durch einen Verstellmechanismus radial zu einer Spannfutterachse gemeinsam verstellbar sind, bekannt.

Aufgrund der rigiden Verstellung der Spannbacken bewirkenden Verstellmechanismus erfolgt bei derartigen Spannvorrichtungen eine Deformation des Werkstückes beim Spannvorgang, was sich dann beim Entspannen des Werkstueckes nach seiner Bearbeitung negativ auf die Form- und Massgenauigkeit auswirkt, da das Werkstueck in jedem Fall seine urspruengliche Form wieder annimmt.

Aus DE 199 34 375 A1 ist eine Spannvorrichtung bekannt, welche ein Spannfutter mit zwei radial verstellbaren und gegen das Werkstück spannbaren Spannbacken umfasst. Die Spannbacken sind jeweils um parallel zur Bearbeitungsachse verlaufende Schwenkachsen begrenzt verschwenkbar angeordnet. Die schwenkbaren Spannbacken können sich hierbei durch Schwenken um die parallel zur Bearbeitungsachse verlaufenden Schwenkachsen an den Umfang eines Werkstücks begrenzt anpassen. Eine Anpassung an Werkstücke mit veränderlicher Formgebung in axialer Richtung entlang der Bearbeitungsachse ist hierbei jedoch nicht möglich, wodurch es bei dieser Spannart zu einem punktuellen Anliegen der Spannbacken an das Werkstück kommt. Hierdurch kommt es zu starken Verformungen in den Bereichen, in denen die Spannbacken der Spannvorrichtung punktuell an dem Werkstück anliegen, verbunden mit einem entsprechend schlechten Ergebnis der Werkstueckform und Massgebung nach dem Entspannen.

Aus DE 36 20 260 A1 ist eine Spannvorrichtung bekannt, welche ein Spannfutter mit radial verstellbaren und gegen das Werkstück spannbaren Spannbacken umfasst. Das Werkstück wird hierbei zwischen zwei Spannspitzen gespannt. Das Spannfutter ist konzentrisch zu einer Spannspitze angeordnet. Um Exzentrizitäten des zwischen den Spitzen gespannten Werkstücks ausgleichen zu können, ist das Spannfutter gegenüber der Spannspitze sowohl in radialer, als auch in axialer Richtung frei verschiebbar angeordnet. Deformationen, die sich bereits beim Einspannen des Werkstücks zwischen den Spannspitzen ergeben, können hierdurch nicht ausgeglichen werden.

Durch US 6,568,694 B1 ist eine Spannvorrichtung zum Einspannen eines entlang einer Bearbeitungsachse zu bearbeitenden Werkstücks in eine die Bearbeitungsachse umfassende Bearbeitungsmaschine bekannt. Die Spannvorrichtung weist einen um die Bearbeitungsachse drehbaren Spannkopf und an diesem angeordnete Spannelemente auf. Der Spannkopf besteht aus einem im Wesentlichen zylinderförmigen Spannfutterkörper, dessen Symmetrieachse mit der Bearbeitungsachse übereinstimmt. Die Spannelemente sind zum Einspannen des Werkstücks in radialer Richtung verstellbar am Spannkopf angeordnet. Die Spannelemente bestehen aus am Spannfutterkörper im Wesentlichen radial zur Bearbeitungsachse verschiebbar angeordneten Spannbacken. Die Spannelemente sind dabei zu deren schwimmender Anordnung um jeweils eine parallel zur Bearbeitungsachse verlaufende Schwenkachse schwenkbar angeordnet.

Durch US 4,353,561 ist ebenfalls eine Spannvorrichtung zum Einspannen eines entlang einer Bearbeitungsachse zu bearbeitenden Werkstücks in eine die Bearbeitungsachse umfassende Bearbeitungsmaschine bekannt. Die Spannvorrichtung weist einen um die Bearbeitungsachse drehbaren Spannkopf und an diesem angeordnete Spannelemente auf. Der Spannkopf besteht aus einem im Wesentlichen zylinderförmigen Spannfutterkörper, dessen Symmetrieachse mit der Bearbeitungsachse übereinstimmt. Die Spannelemente sind in radialer Richtung verstellbar am Spannkopf angeordnet. Die Spannelemente bestehen aus am Spannfutterkörper zum Einspannen des Werkstücks im Wesentlichen radial zur Bearbeitungsachse verschiebbar angeordneten Spannbacken. Die Spannelemente sind dabei zu deren schwimmender Anordnung um jeweils eine quer zur Bearbeitungsachse verlaufende und die Bearbeitungsachse nicht schneidende Schwenkachse schwenkbar angeordnet.

Nachteilig am Stand der Technik ist somit, dass beispielsweise bei sehr präzisen und in vorhergehenden Bearbeitungsstufen genau gefertigten Werkstücken, insbesondere bei rohrförmigen und/oder dünnwandigen Werkstücken, diese beim Einspannen deformiert werden, da die Spannelemente dem Werkstück beim Einspannen ihre Form aufzwingen beziehungsweise das Werkstück entsprechend der Positionen der Spannelemente und damit entsprechend der Position der punktoder linienförmigen Kontaktflächen zwischen Spannkopf und Werkstück deformiert wird. Bei ungenau vorgefertigten Werkstücken ergibt sich darüber hinaus das Problem, dass diese im Wesentlichen entsprechend der Form ihres Außen- oder Innenumfangs im Bereich der punktförmigen Kontaktflächen zwischen Spannkopf und Werkstück zentriert werden, und nicht entsprechend einer bevorzugten Bearbeitungsachse, die sich beispielsweise am zu fertigenden Werkstück orientiert.

Der Erfindung liegt daher die Aufgabe zugrunde, eine Spannvorrichtung zu entwickeln, bei der eine Deformation vor allem von ungenau vorgefertigten Werkstücken beim Einspannen vermieden wird, sowie eine Deformation von genau vorgefertigten Werkstücken vermieden wird, welche beispielsweise unter Schmutzeinwirkung eingespannt werden.

Die Aufgabe wird bei einer Spannvorrichtung der eingangs genannten Gattung durch die Merkmale des Anspruchs 1 gelöst.

Der Begriff schwimmende Anordnung umfasst dabei mindestens in ungespanntem Zustand der Spannvorrichtung einen zusätzlichen Freiheitsgrad für die Bewegung der Spannelemente zusätzlich zu deren zum Einspannen des Werkstücks erfolgenden Bewegung gemeinsam mit dem Spannkopf. Ein solcher Freiheitsgrad kann eine schwenkbare Anordnung der Spannelemente um jeweils eine eigene Schwenkachse umfassen.

Konkret bedeutet dies bei einer als Spannspitze, umfassend einen Spannkopf sowie an diesem auswechselbar angeordnete Spannelemente, ausgeführten erfindungsgemäßen Spannvorrichtung, dass die Spannelemente am Spannkopf wie oben beschrieben schwimmend gelagert sind, d. h., dass die Spannelemente jeweils relativ zum Spannkopf um mindestens eine eigene Achse verschwenkbar sind.

Die erfindungsgemäße Spannvorrichtung weist gegenüber dem Stand der Technik den Vorteil auf, dass sich durch die schwimmende Anordnung der Spannelemente am Spannkopf die Spannelemente der gegebenen Form eines in die Bearbeitungsmaschine einzuspannenden Werkstücks anpassen können, wodurch beim Entspannen nach der Bearbeitung das Werkstück seine genaue gefertigte Geometrie behält. Dies ist insbesondere bei rohrförmigen und/oder dünnwandigen Werkstücken von Vorteil, da diese beim Einspannen durch die Spannelemente leicht deformiert werden können. Dabei ist beispielsweise denkbar, dass insbesondere zum Einspannen von Werkstücken mit einer in axialer Richtung veränderlichen Form die Spannbacken jeweils entweder um eine die Bearbeitungsachse schneidende, um eine zu dieser wihdschlefen, oder um mehrere Achsen verschwenkbar sind.

Eine vorteilhafte Ausgestaltung der Erfindung sieht vor, dass die Spannelemente in ungespanntem Zustand und bis kurz vor der endgültigen Spannposition Schwenkbewegungen ausüben können. Dabei umfasst die schwimmende Anordnung der Spannelemente am Spannkopf mindestens eine schwenkbare Anordnung der Spannelemente am Spannkopf. Zusätzlich kann die schwimmende Anordnung eine Verschiebbarkeit der einzelnen Spannelemente normal zu deren jeweiliger zum Einspannen des Werkstücks erforderlichen Bewegung umfassen.

Eine vorteilhafte Ausgestaltung der Erfindung sieht vor, dass die Spannelemente um jeweils eine parallel zur Bearbeitungsachse verlaufende Schwenkachse schwenkbar angeordnet sind, so dass jedes Spannelement eine Schwenkbewegung um eine eigene, parallel zur Bearbeitungsachse verlaufende Schwenkachse ausüben kann. Neben dieser Schwenkachsen können die schwenkbaren Spannelemente zusätzlich um zwei weitere Schwenkachsen schwenkbar angeordnet sein, dass heisst von der schwimmenden 6-Punkt-Spannung auf eine schwimmende 12-Punkt-Spannung erweitert werden.

Eine andere vorteilhafte Ausgestaltung der Erfindung sieht vor, dass die Spannelemente regelmäßig über den Umfang des in die Bearbeitungsmaschine einzuspannenden Werkstücks verteilt angeordnet sind. Durch eine regelmäßige Verteilung der Spannelemente über den Umfang wird eine höchstmöglich gleichmäßige Einspannung des Werkstücks erreicht, mit geringstmöglicher Deformation des Werkstücks aufgrund der Einspannsituation.

Eine andere vorteilhafte Ausgestaltung der Erfindung sieht vor, dass die Spannelemente jeweils zwei in Umfangsrichtung des einzuspannenden Werkstücks vorzugsweise voneinander beabstandet angeordnete, mit dem in die Bearbeitungsmaschine eingespannten Werkstück in Kontakt bringbare Spannflächen aufweisen, welche sich aufgrund der schwimmenden Anordnung der Spannelemente an dem Spannkopf beim Einspannen des Werkstücks in die Bearbeitungsmaschine an die vorhandene Form des Werkstücks anlegen. Der Begriff Spannfläche umfasst hierbei auch solche Flächen, die eine infinitessimale Ausdehnung in einer Richtung aufweisen, beispielsweise Berührungslinien.

Eine andere vorteilhafte Ausgestaltung der Erfindung sieht vor, dass die Spannflächen aller Spannelemente der Spannvorrichtung regelmäßig über den Umfang des in die Bearbeitungsmaschine einzuspannenden Werkstücks verteilt angeordnet sind. Durch die regelmäßig über den Umfang verteilten Spannflächen, welche sich aufgrund der schwimmenden Anordnung der Spannelemente am Spannkopf gleichmäßig an das Werkstück anlegen, wird die Gefahr einer Deformation des Werkstücks beim Einspannen in die Spannvorrichtung weiter verringert.

Eine vorteilhafte Ausgestaltung der Erfindung ist gekennzeichnet durch drei regelmäßig über den Umfang des in die Bearbeitungsmaschine einzuspannenden Werkstücks verteilte Spannelemente, welche gemeinsam sechs regelmäßig über den Umfang des Werkstücks verteilte Spannflächen aufweisen.

Eine zusätzliche, vorteilhafte Ausgestaltung der Erfindung sieht vor, dass der Spannkopf eine mindestens zum Teil stirnseitig in ein rohrförmiges Werkstück einführbare, im Wesentlichen kegel- oder kegelstumpfförmige Spannspitze umfasst, deren Symmetrieachse mit der Bearbeitungsachse übereinstimmt, wobei die Spannelemente auf der Mantelfläche der Spannspitze schwimmend angeordnet sind.

Eine zusätzliche, vorteilhafte Ausgestaltung der Erfindung sieht vor, dass der Spannkopf eine mindestens zum Teil stirnseitig in ein rohrförmiges Werkstück einführbare, im Wesentlichen kegel- oder kegelstumpfförmige Spannspitze umfasst, deren Symmetrieachse mit der Bearbeitungsachse übereinstimmt, wobei die Spannelemente in auf der Mantelfläche der Spannspitze angeordneten Ausnehmungen schwimmend angeordnet sind.

Eine zusätzliche, vorteilhafte Ausgestaltung der Erfindung sieht vor, dass der Spannkopf eine mindestens zum Teil stirnseitig in ein rohrförmiges Werkstück einführbare, im Wesentlichen kegel- oder kegelstumpfförmige Spannspitze umfasst, deren Symmetrieachse mit der Bearbeitungsachse übereinstimmt, wobei die Spannelemente mindestens einen Teil der Mantelfläche der kegel- oder kegelstumpfförmigen Spannspitze bilden.

Eine zusätzliche, besonders vorteilhafte Ausgestaltung der Erfindung sieht vor, dass der um die Bearbeitungsachse drehbar angeordnete Spannkopf antreibbar ist. Dies ist beispielsweise zur Verwendung der erfindungsgemäßen Spannvorrichtung in Verbindung mit Dreh- oder Rundschleifmaschinen erforderlich.

Eine besonders vorteilhafte Ausgestaltung der Erfindung sieht eine eine Bearbeitungsachse umfassende Bearbeitungsmaschine vor, welche zwei auf der Bearbeitungsachse einander gegenüberliegend angeordnete Spannspitzen wie zuvor beschrieben aufweist, zwischen denen beispielsweise ein rohrförmiges Werkstück eingespannt werden kann. Dabei ist vorzugsweise eine der beiden Spannspitzen antreibbar, wobei die zweite Spannspitze von der ersten über das Werkstück angetrieben wird.

Die Erfindung wird nun anhand von Ausführungsbeispielen näher erläutert. Es zeigen:
- Fig. 3a): eine Vorderansicht einer erfindungsgemäßen Spannspitze mit daran angeordneten Spannelementen,
- Fig. 3b): eine Seitenansicht der Spannspitze aus Fig. 3a),
- Fig. 3c): ein Schnitt entlang der Linie A-A durch die Spannspitze aus Fig. 3b),
- Fig. 4a): eine Vorderansicht eines an einer in den Figuren 3 dargestellten Spannspitze schwenkbar angeordneten Spannelements,
- Fig. 4b): eine Seitenansicht des Spannelements in Fig. 4a),
- Fig. 4c): eine Draufsicht auf das Spannelement aus Fig. 4a), sowie
- Fig. 4d): eine perspektivische Ansicht des Spannelements in Fig. 4a),

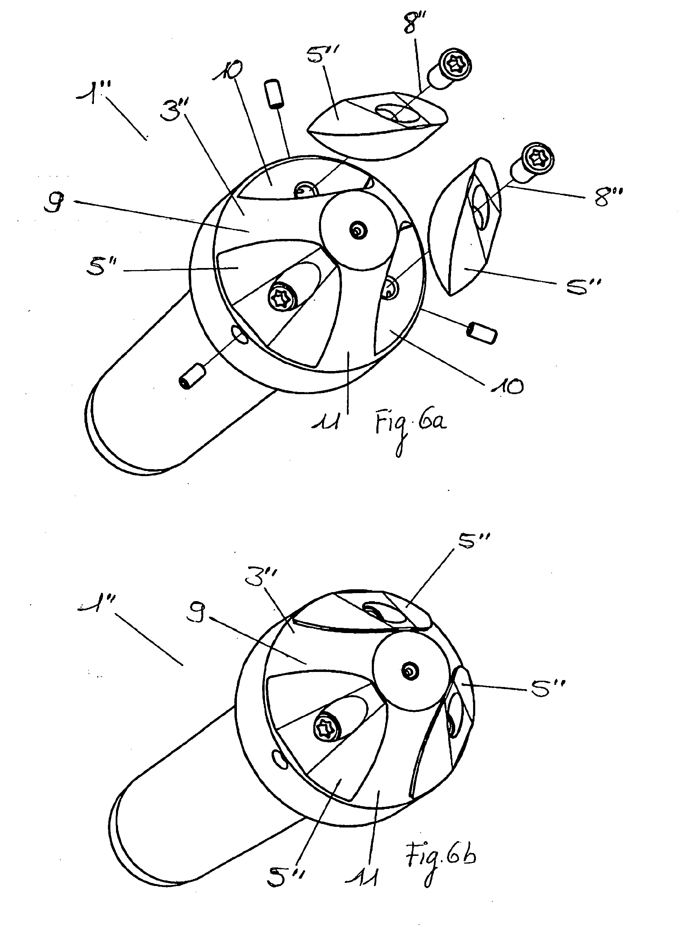

- Fig. 6a): eine perspektivische Ansicht der erfindungsgemäßen Spannspitze mit daran angeordneten Spannelementen aus den Fig. 3 und 4 in Explosionsdarstellung, sowie
- Fig. 6b): eine perspektivische Ansicht der Spannvorrichtung aus Fig. 6a).

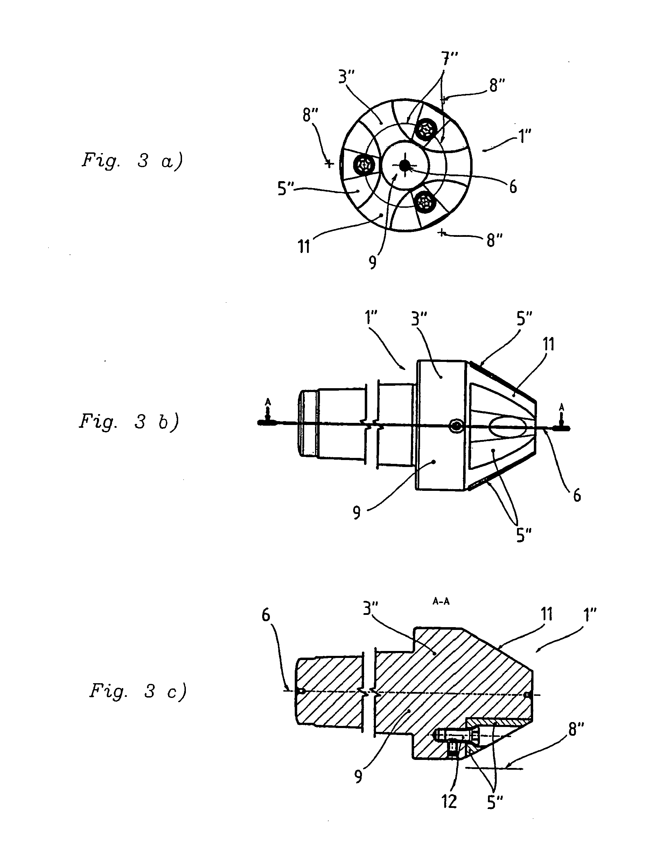

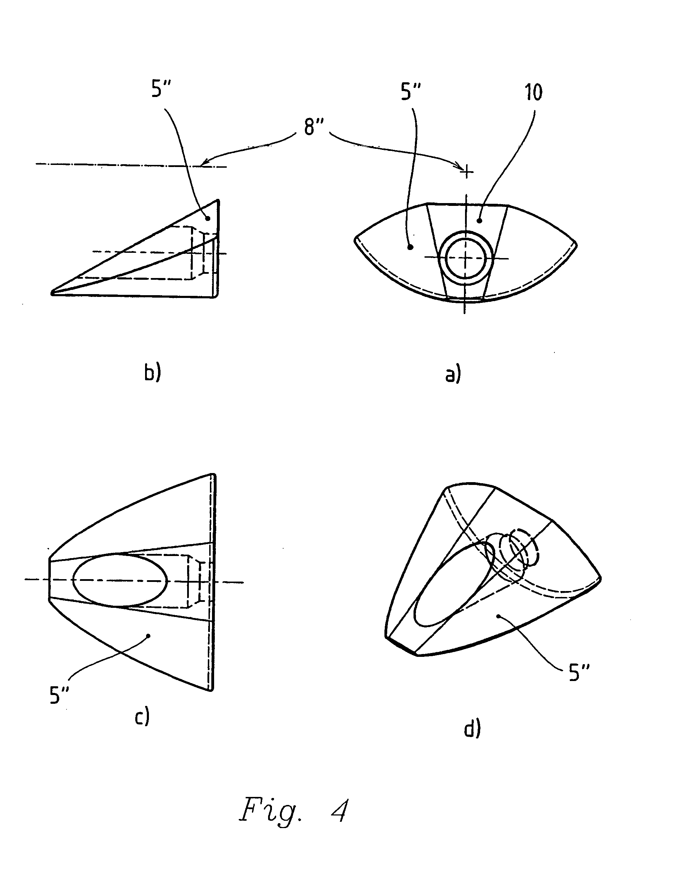

Eine in den Figuren 3 und 4 dargestellte erfindungsgemäße Spannvorrichtung 1'' umfasst eine kegelstumpfförmige Spannspitze 9, die einen Spannkopf 3'' und an diesem angeordnete, jeweils um eigene, parallel zur Bearbeitungsachse 6 verlaufenden Schwenkachsen 8" schwenkbare Spannelemente 5'' umfasst. Die Spannelemente 5" sind in auf der Mantelfläche 11 der Spannspitze 9 ausgebildeten Ausnehmungen 10 schwimmend angeordnet. Bei dem Ausführungsbeispiel in den Fig. 3 und 4 ist die schwimmende Anordnung dadurch erreicht, indem die Spannelemente 5" um parallel zur Bearbeitungsachse 6 verlaufenden Schwenkachsen 8" schwenkbar sind. Ebenso ist denkbar, dass die Schwenkachsen 8'' nicht parallel zur Bearbeitungsachse 6 verlaufen, sondern diese in einem gemeinsamen Punkt schneiden. Die Symmetrieachse der kegelstumpfförmigen Spannspitze 9 fällt im Normalfall mit der Bearbeitungsachse 6 zusammen, kann aber auch parallel verschoben zur Bearbeitungsachse 6 verlaufen. Zum Einspannen eines in Fig. 3 a) schematisch durch einen strichpunktierten Kreis dargestellten, rohrartigen Werkstücks sind zwei einander auf der Bearbeitungsachse 6 gegenüberliegende Spannspitzen 9 vorgesehen, welche mittels eines nicht dargestellten Verstellmechanismus unter Kraft aufeinander zu bewegt werden können. Die Spannspitzen 9 greifen dabei in Richtung der Bearbeitungsachse 6 stirnseitig in das rohrartige Werkstück. Die Spannelemente 5" sind sowohl zur Spannspitze 9 hin, als auch von der Spannspüze 9 weg konvex oder konkav ausgebildet. Die Spannelemente 5" weisen dadurch wiederum je zwei Spannflächen 7" auf, welche sich beide aufgrund der schwimmenden Anordnung der Spannelemente 5" am Spannkopf 3" beim Einspannen eines Werkstücks zwischen zwei Spannspitzen 9 an das Werkstück anlegen. Hierdurch werden Deformationen beim Spannen von rohrartigen Werkstücken vermieden.

Die Schwenkbewegungen der Spannelemente 5', 5'' können mittels geeigneter Mittel begrenzt werden, beispielsweise um im ungespannten Zustand ein das Einspannen eines Werkstücks behinderndes Wegschwenken weit von der Bearbeitungsachse 6 zu verhindern. Solche Mittel sind beispielsweise die in den Fig. 3 und 4 dargestellten, die Schwenkbewegung begrenzenden Schrauben 12 oder das Spiel zwischen den Ausnehmungen 10 und den darin angeordneten Spannelemente 5", welches bei der in den Fig. 3 und 4 dargestellten Spannvorrichtung 1 " durch die Formgebung der Ausnehmungen 10 und der darin angeordneten Spannelemente 5" beeinflusst werden kann.

Die Erfindung ist insbesondere im Bereich der Herstellung und des Betriebs von Bearbeitungsmaschinen wie etwa Werkzeugmaschinen sowie bei der Herstellung von Spannvorrichtungen für derartige Maschinen gewerblich anwendbar. Diese Spannmethode kommt insbesondere dann vorteilhaft zum Einsatz, wenn genaue Werkstücke verlangt werden, die eine ungenaue Rohrform besitzen, beschaedigte Spannflaechen aufweisen oder durch Härteverfahren oder dergleichen deformiert sind. Selbstverständlich können auch genau vorbearbeitete Werkstücke gespannt werden, der Vorteil liegt dann in der Prozesssicherheit, wenn z.B. Schmutz zwischen die Spannflächen gelangt, oder die Spannflaechen durch einen vorhergehenden Transport beschaedigt sind.

## Patentansprüche

1. Spannvorrichtung (1 ") zum Einspannen eines entlang einer Bearbeitungsachse (6) zu bearbeitenden Werkstücks in eine die Bearbeitungsachse (6) umfassende Bearbeitungsmaschine, welche Spannvorrichtung (1'') eine einen um die Bearbeitungsachse (6) drehbaren Spannkopf (3") und an diesem schwimmend angeordnete Spannelemente (5'') umfassende Spannspitze (9) aufweist,
**dadurch gekennzeichnet,**
**dass** die Spannelemente zu deren schwimmender Anordnung jeweils um eigene Schwenkachsen (8'') schwenkbar sind.

2. Spannvorrichtung (1 ") nach Anspruch 1,
**dadurch gekennzeichnet,**
**dass** die Spannelemente zu deren schwimmender Anordnung jeweils um eigene, die Bearbeitungsachse (6) in einem gemeinsamen Punkt schneidende Schwenkachsen (8'') schwenkbar sind.

3. Spannvorrichtung (1 ") nach Anspruch 1 oder 2,
**dadurch gekennzeichnet,**
**dass** die Spannelemente zu deren schwimmender Anordnung jeweils um eigene, parallel zur Bearbeitungsachse (6) verlaufende Schwenkachsen (8") schwenkbar sind.

4. Spannvorrichtung (1 ") nach Anspruch 1, 2 oder 3,
**dadurch gekennzeichnet,**
**dass** die Spannelemente zu deren schwimmender Anordnung zusätzlich jeweils relativ zum Spannkopf (3'') in mindestens einer Richtung quer zu einer zum Einspannen erforderlichen Verstellrichtung der Spannspitze translatorisch verschiebbar sind.

5. Spannvorrichtung nach einem der Ansprüche 1 bis 4,
**dadurch gekennzeichnet,**
**dass** die Spannelemente (5") in ungespanntem Zustand und bis kurz vor dem gespannten Zustand Schwenkbewegungen ausüben können.

6. Spannvorrichtung nach einem der vorhergehenden Ansprüche,
**dadurch gekennzeichnet,**
**dass** die Spannelemente (5") regelmäßig über den Umfang des in die Bearbeitungsmaschine einzuspannenden Werkstücks verteilt angeordnet sind.

7. Spannvorrichtung nach einem der vorhergehenden Ansprüche,
**dadurch gekennzeichnet,**
**dass** die Spannelemente (5") jeweils zwei Spannflächen (7") aufweisen.

8. Spannvorrichtung nach Anspruch 7,
**dadurch gekennzeichnet,**
**dass** die Spannflächen (7'') regelmäßig über den Umfang des in die Bearbeitungsmaschine einzuspannenden Werkstücks verteilt angeordnet sind.

9. Spannvorrichtung nach Anspruch 8,
**gekennzeichnet durch** drei regelmäßig über den Umfang des in die Bearbeitungsmaschine einzuspannenden Werkstücks verteilte Spannelemente (5"), welche gemeinsam sechs (oder mit zwei zusätzlichen Schwenkachsen zwölf) regelmäßig über den Umfang des Werkstücks verteilte Spannflächen (7") aufweisen.

10. Spannvorrichtung nach einem der vorhergehenden Ansprüche,
**dadurch gekennzeichnet,**
**dass** der Spannkopf (3'') eine mindestens zum Teil stirnseitig in ein rohrförmiges Werkstück einführbare, im Wesentlichen kegel- oder kegelstumpfförmige Spannspitze (9) umfasst, deren Symmetrieachse mit der Bearbeitungsachse (6) übereinstimmt, wobei die Spannelemente (5'') auf der Mantelfläche (11) der Spannspitze (9) schwimmend angeordnet sind.

11. Spannvorrichtung nach einem der Ansprüche 1 bis 9,
**dadurch gekennzeichnet,**
**dass** der Spannkopf (3'') eine mindestens zum Teil stirnseitig in ein rohrförmiges Werkstück einführbare, im Wesentlichen kegel- oder kegelstumpfförmige Spannspitze (9) umfasst, deren Symmetrieachse mit der Bearbeitungsachse (6) übereinstimmt, wobei die Spannelemente (5'') in auf der Mantelfläche (11) der Spannspitze (9) angeordneten Ausnehmungen (10) schwimmend angeordnet sind.

12. Spannvorrichtung nach einem der Ansprüche 1 bis 9,
**dadurch gekennzeichnet,**
**dass** der Spannkopf (3") eine mindestens zum Teil stirnseitig in ein rohrförmiges Werkstück einführbare, im Wesentlichen kegel- oder kegelstumpfförmige Spannspitze (9) umfasst, deren Symmetrieachse mit der Bearbeitungsachse (6) übereinstimmt, wobei die Spannelemente (5'') mindestens einen Teil der Mantelfläche (11) der kegel- oder kegelstumpfförmigen Spannspitze (9) bilden.

13. Spannvorrichtung nach einem der vorhergehenden Ansprüche,
**dadurch gekennzeichnet,**
**dass** der um die Bearbeitungsachse drehbar angeordnete Spannkopf antreibbar ist.

14. Bearbeitungsmaschine umfassend eine Bearbeitungsachse (6),
**gekennzeichnet durch** eine zwei auf der Bearbeitungsachse (6) gegenüberliegend angeordnete Spannspitzen (9) zum Einspannen eines rohrförmigen Werkstücks zwischen den beiden Spannspitzen (9) umfassende Spannvorrichtung (1 ") nach einem der vorhergehenden Ansprüche.

## Claims

1. A clamping device (1'') for clamping a workpiece, which is to be machined along a machining axis (6), into a processing machine, which clamping device (1'') has a clamping head (3") that is rotatable about the machining axis (6) and a clamping tip (9) that includes clamping elements (5") arranged in floating fashion on the clamping head,
**characterized in that**
the clamping elements, for being arranged in floating fashion, are each pivotable about their own pivot axes (8").

2. The clamping device (1'') of claim 1,
**characterized in that**
the clamping elements, for being arranged in floating fashion, are each pivotable about their own pivot axes (8"), which intersect the machining axis (6) at a common point.

3. The clamping device (1") of claim 1 or 2,
**characterized in that**
the clamping elements, for being arranged in floating fashion, are each pivotable about their own pivot axes (8"), which extend parallel to the machining axis (6).

4. The clamping device (1") of claim 1, 2 or 3,
**characterized in that**
the clamping elements, for being arranged in floating fashion, are each additionally displaceable translationally relative to the clamping head (3") in at least one direction, transversely to an adjusting direction of the clamping tip, which adjusting direction is required for the clamping.

5. The clamping device of one of claim 1-4,
**characterized in that**
in the unclamped state and until shortly prior to the clamped state, the clamping elements (5") are capable of executing pivoting motions.

6. The clamping device of one of the foregoing claims,
**characterized in that**
the clamping elements (5") are uniformly distributed over the circumference of the workpiece that is to be clamped into the processing machine.

7. The clamping device of one of the foregoing claims,
**characterized in that**
the clamping elements (5") each have two clamping faces (7").

8. The clamping device of one of the foregoing claims,
**characterized in that**
the clamping faces (7") are uniformly distributed over the circumference of the workpiece that is to be clamped into the processing machine.

9. The clamping device of claim 8,
**characterized by** three clamping elements (5"), uniformly distributed over the circumference of the workpiece that is to be clamped into the processing machine, which clamping elements jointly have six (or with two additional pivot axes, twelve) clamping faces (7") that are uniformly distributed over the circumference of the workpiece.

10. The clamping device of one of the foregoing claims,
**characterized in that**
the clamping head (3") includes a substantially conical or frustoconical clamping tip (9), which can be inserted by its face end at least partway into a tubular workpiece, and whose axis of symmetry coincides with the machining axis (6), and the clamping elements (5") are arranged in floating fashion on the jacket face (11) of the clamping tip (9).

11. The clamping device of one of claims 1-9,
**characterized in that**
the clamping head (3") includes a substantially conical or frustoconical clamping tip (9), which can be inserted by its face end at least partway into a tubular workpiece, and whose axis of symmetry coincides with the machining axis (6), and the clamping elements (5") are arranged in floating fashion in recesses (10) located on the jacket face (11) of the clamping tip (9).

12. The clamping device of one of claims 1-9,
**characterized in that**
the clamping head (3") includes a substantially conical or frustoconical clamping tip (9), which can be inserted by its face end at least partway into a tubular workpiece, and whose axis of symmetry coincides with the machining axis (6), and the clamping elements (5") form at least a portion of the jacket face (11) of the conical or frustoconical clamping tip (9).

13. The clamping device of one of the foregoing claims,
**characterized in that**
the clamping head located rotatably about the machining axis is capable of being driven.

14. A processing machine including a machining axis (6),
**characterized by** clamping device (1") of one of the foregoing claims including a clamping tip (9), located opposite the machining axis (6), for clamping a tubular workpiece between the two clamping tips (9)

## Revendications

1. Dispositif de serrage (1") dévolu à l'ablocage d'une pièce, devant être usinée le long d'un axe d'usinage (6), dans une machine d'usinage comprenant ledit axe d'usinage (6), lequel dispositif de serrage (1") présente une pointe de serrage (9) qui inclut une tête de serrage (3") apte à tourner autour dudit axe d'usinage (6), et des éléments de serrage (5") à agencement flottant sur ladite tête,
**caractérisé par le fait**
**que** les éléments de serrage peuvent respectivement pivoter autour d'axes de pivotement propres (8"), en vue de leur agencement flottant.

2. Dispositif de serrage (1") selon la revendication 1,
**caractérisé par le fait**
**que** les éléments de serrage peuvent respectivement pivoter, en vue de leur agencement flottant, autour d'axes de pivotement propres (8") qui coupent l'axe d'usinage (6) en un point commun.

3. Dispositif de serrage (1") selon la revendication 1 ou 2,
**caractérisé par le fait**
**que** les éléments de serrage peuvent respectivement pivoter, en vue de leur agencement flottant, autour d'axes de pivotement propres (8") qui s'étendent parallèlement à l'axe d'usinage (6).

4. Dispositif de serrage (1") selon la revendication 1, 2 ou 3,
**caractérisé par le fait**
**que** les éléments de serrage) peuvent additionnellement accomplir, en vue de leur agencement flottant, un coulissement translatoire respectif par rapport à la tête de serrage (3"), dans au moins une direction transversale à une direction de déplacement de la pointe de serrage, nécessaire à l'ablocage.

5. Dispositif de serrage (1") selon l'une des revendications 1 à 4,
**caractérisé par le fait**
**que** les éléments de serrage (5") peuvent accomplir des mouvements pivotants à l'état desserré et jusqu'à un court instant précédant l'état serré.

6. Dispositif de serrage (1") selon l'une des revendications précédentes, **caractérisé par le fait**
**que** les éléments de serrage (5") sont agencés avec répartition uniforme sur le pourtour de la pièce devant être abloquée dans la machine d'usinage.

7. Dispositif de serrage (1") selon l'une des revendications précédentes,
**caractérisé par le fait**
**que** les éléments de serrage (5") sont respectivement pourvus de deux surfaces de serrage (7").

8. Dispositif de serrage (1") selon la revendication 7,
**caractérisé par le fait**
**que** les surfaces de serrage (7") sont agencées avec répartition uniforme sur le pourtour de la pièce devant être abloquée dans la machine d'usinage.

9. Dispositif de serrage (1") selon la revendication 8,
**caractérisé par** trois éléments de serrage (5") qui sont uniformément répartis sur le pourtour de la pièce devant être abloquée dans la machine d'usinage, et sont conjointement dotés de six (ou de douze, en présence de deux axes de pivotement supplémentaires) surfaces de serrage (7") uniformément réparties sur le pourtour de ladite pièce.

10. Dispositif de serrage (1") selon l'une des revendications précédentes,
**caractérisé par le fait**
**que** la tête de serrage (3") est munie d'une pointe de serrage (9) qui revêt, pour l'essentiel, une forme conique ou tronconique, peut être insérée frontalement dans une pièce tubulaire, au moins en partie, et dont l'axe de symétrie coïncide avec l'axe d'usinage (6), les éléments de serrage (5") étant agencés de manière flottante sur la surface (11) de l'enveloppe de ladite pointe de serrage (9).

11. Dispositif de serrage (1") selon l'une des revendications 1 à 9,
**caractérisé par le fait**
**que** la tête de serrage (3") est munie d'une pointe de serrage (9) qui revêt, pour l'essentiel, une forme conique ou tronconique, peut être insérée frontalement dans une pièce tubulaire, au moins en partie, et dont l'axe de symétrie coïncide avec l'axe d'usinage (6), les éléments de serrage (5") étant logés, de manière flottante, dans des évidements (10) pratiqués dans la surface (11) de l'enveloppe de ladite pointe de serrage (9).

12. Dispositif de serrage (1") selon l'une des revendications 1 à 9,
**caractérisé par le fait**
**que** la tête de serrage (3") est munie d'une pointe de serrage (9) qui revêt, pour l'essentiel, une forme conique ou tronconique, peut être insérée frontalement dans une pièce tubulaire, au moins en partie, et dont l'axe de symétrie coïncide avec l'axe d'usinage (6), les éléments de serrage (5") matérialisant au moins une partie de la surface (11) de l'enveloppe de ladite pointe de serrage (9) conique ou tronconique.

13. Dispositif de serrage (1") selon l'une des revendications précédentes,
**caractérisé par le fait**
**que** la tête de serrage, montée à rotation autour de l'axe d'usinage, est apte à l'entraînement.

14. Machine d'usinage comprenant un axe d'usinage (6),
**caractérisée par** un dispositif de serrage (1") conforme à l'une des revendications précédentes, muni de deux pointes de serrage (9) agencées en vis-à-vis sur l'axe d'usinage (6), en vue d'abloquer une pièce tubulaire entre les deux pointes de serrage (9).
